# EUROPEAN PATENT SPECIFICATION

(11) **EP 0 754 573 B1**
(45) Date of publication and mention of the grant of the patent: **30.05.2001**
(21) Application number: 96305224.6
(22) Date of filing: 17.07.1996
(51) Int. Cl.: B60C 9/22, B60C 9/20

(54) **Pneumatic tyre**
Luftreifen
Bandage pneumatique

(30) Priority: 19.07.1995 DE 19526408
(43) Date of publication of application: 22.01.1997
(73) Proprietor: Dunlop GmbH, 63450 Hanau (DE)
(72) Inventor: Lowenhaupt, Bernd, 64625 Bensheim (DE); Winter, Hans-Joachim, 63571 Gelnhausen (DE)
(74) Representative: Stewart, Charles Geoffrey

(56) References cited:
- EP-A- 0 454 432
- EP-A- 0 531 136
- DE-A- 4 209 817

## Description

The present invention relates to a pneumatic vehicle tyre comprising a carcass, a tread strip, a breaker assembly provided between the carcass and the tread strip and comprising at least two breaker plies reinforced by threads or cords of non-metallic material which extend at a predeterminable angle to the mid-circumferential plane of the tyre and serve as reinforcing element, and a breaker cover or bandage which surrounds the breaker arrangement, and which comprises at least one cover ply having reinforcing thread or cords which extend at least substantially in the circumferential direction of the tyre.

Such pneumatic vehicle tyres are customarily manufactured using a cylindrical drum and the individual tyre components, such as the carcass, breaker plies, breaker cover or bandage and tread strip, are laid one after the other onto the drum. The tyre carcass thus assembled is then shaped into a heated tyre mould, in which the tyre tread pattern is formed and the tyre is vulcanised.

In order to be able to shape the tyre carcass into the heated tyre mould the individual tyre components must be sufficiently radially extensible so that they can adopt the final arched form in the heated tyre mould. On the other hand, the finished tyre, change of shape and particularly increase of diameter of the tyre under static or dynamic loading should be avoided as far as possible. Whereas the breaker plies permit extension to the required degree, as a result of their cords which are inclined at a predeterminable angle to the mid-circumferential plane of the tyre, this can only be achieved for the breaker cover or bandage which has cords extending substantially in the circumferential direction of the tyre, through suitable choice of the cord material. In this respect additional account should be taken of the fact that the breaker cover serves to prevent separation of the breaker components during the operation of the tyre. Despite the extensibility necessary for the manufacture of the tyre the breaker cover must therefore have an adequate strength. In customer tyres with steel breakers polyamide, i.e. nylon, is used as a material for the cords of the breaker cover. Nylon has the advantage that it has, on the one hand, an adequate extensibility for the manufacturing process of the tyre, but nevertheless provides the breaker cover the adequate strength during the operation of the tyre. This is attributed to the fact that nylon shrinks during heating-up of the tyre during rolling. As the tyre heats up more and more with increasing rotational speed the retaining force of the breaker cover increases by a corresponding amount. In fact in the vulcanisation process the nylon shrinks due to the high temperature and thus generates a strong hoop tension in the compression in the steel breaker plies. Thus the nylon provides both a pre-tension effect and a secondary strengthening of the breaker assembly when rolling in service.

However, in tyres with a non-metallic breaker arrangement the problem now exists that the breaker plies only oppose the shrinkage force of a nylon bandage with a low resistance. The tyre heated in the tyre heating mould thus deforms as a result of the shrinkage force of a nylon breaker cover as soon as the pressure used for forming of the tyre tread pattern is removed.

It has thus been proposed that a non-shrinking material should be used for the threads or cords of the breaker cover, which nevertheless ensures adequate retaining force even with rapidly running tyres. A material of this kind is, for example, aramide, which is, however, comparatively expensive. Moreover, when using aramide special measures must be taken in order to ensure adequate extensibility of the breaker cover during tyre manufacture.

Tyre constructions including both metallic breakers or non-metallic breakers and having a non-metallic cover ply are known from DE 4209817. In these known constructions the cover plies comprise a material of high modulus in the central region and a material of lower modulus in the shoulder or edge regions. The materials for the central region include fibres or cords of polyamide, polyester rayon or aramid whilst those of the edge regions included polyamide, polyester or rayon.

The invention is thus based on the object if setting forth a pneumatic vehicle tyre of the initially named kind, i.e. with non-metallic breaker plies, which does not have these disadvantages. In particular the material used for the threads or cords of the breaker cover should be favourably priced and satisfy the requirements which have been set.

According to the present invention this object is satisfied in a tyre of the initially named kind in that the breaker cover has threads or cords of a heat-shrinkable material substantially only in the shoulder region of the tyre and in the central region of the tyre lying therebetween there is either no breaker cover or a breaker cover is provided with threads or cords of a material with low or no thermal shrinkage and in that in the shoulder region the breaker cover is formed from a helically wound narrow strip in which neighbouring turns of the strip overlap each other at least in part.

Surprisingly it has turned out with this construction that the thermal shrinkage of the nylon in tyre manufacture leads to no problems, or only to easily controllable problems, when the use of nylon for the cords or the breaker cover is essentially restricted to the shoulder region of the tyre, and that in doing so no penalties must be tolerated with respect of the high speed running characteristics. In the operation of the tyre, during fast running, the shrinkage forces which are produced by the heating-up of the tyre, counteract the centrifugal forces on the breaker arrangement, which likewise arise with increasing tyre speed. In the operation of the tyre the resistance to compression of a steel belt is thus substantially replaced by the centrifugal forces acting on the breaker arrangement. However, in vulcanisation deformations of the tyre as a result of the hearing is very little since thermal shrinkage only occurs in the shoulder region.

In the middle tyre region the required extension of the breaker cover during tyre manufacture is, in any event, relatively small so that here aramide can be straightforwardly used for the threads or cords of the breaker cover. In the same way threads or cords of glass fibre or carbon fibre can also be used. On the other hand, in the middle tyre region a less strong but also less expensive material can be used, which is free of thermal shrinkage, such as rayon, or indeed a breaker cover can be dispensed with entirely since here the radial forces to be compensated are relatively small. In any event, no shrinkage force or only a low shrinkage force acts on the middle tyre region on heating up of the tyre.

The parts of the breaker cover in the two shoulder regions of the tyre with threads or cords of heat-shrinking material are preferably designed to be as narrow as possible in order to keep the effect of the thermal shrinkage during the manufacture of the tyre as small as possible. However, a covering over of the axial side edges of all breaker plies must be ensured. In any event, these parts should in each case not exceed 30% of the breaker width. With a customary vehicle tyre the width of this region will thus amount to between about 5mm and about 50mm at each side of the tyre.

In accordance with a preferred embodiment the parts of the breaker cover with threads or cords of heat-shrinking material in the two shoulder regions of the tyre extend axially slightly further outwardly than the side edge of the broadest breaker play and end axially slightly further inwardly than the side edge of the narrowest breaker ply. A special design could be effected such that only a few turns of the nylon threads or nylon cords are wound beyond the respective breaker edge.

The expansion of the breaker arrangement in the radial direction of the tyre can be set to the desired amount by the choice of the degree of heat shrinkage of the material used for the threads or cords of the breaker cover and/or by the choice of the thickness and also of the winding strength of the breaker cover. The firmer the winding and the greater the thickness of the breaker cover the higher is the restraining force with rapidly running tyres. In particular the choice can also be made such that the oppositely directed forces substantially cancel, i.e. no movement of the breaker arrangement takes place during operation of the tyre. The restraining force can basically also be set in this manner in the middle tyre region.

Nylon in particular or also polyester can be considered as the material for the threads or cords of the breaker cover in the shoulder region. With both materials a high retaining force with rapidly running tyres can be achieved as well as a good extensibility during tyre manufacture.

The breaker cover can thus be formed in the two shoulder regions of the tyre and also in the central tyre region lying therebetween, either as a broad band, whose ends are disposed so that they abut or overlap one another, or also from a narrow strip of a helically wound strip bandage, a so-called jointless bandage (JLB). The individual turns of the strip bandage can respectively overlap one another, with the width of overlap also changing in the axial direction of the tyre. In this way the thickness and thus the shrinkage force of the breaker arrangement can be set amongst other things, which, in turn, determines the mobility of the breaker arrangement.

Aramide or rayon in particular can also be used for the threads or cords of the breaker cover in the middle tyre region as material which does not shrink when heated or hardly shrinks when heated. The threads or cords of the breaker arrangement can consist of textile material, inn particular likewise of aramide. However, threads or cords of carbon fibre or also glass fibre can be provided. The breaker arrangement is preferably formed as a cut breaker.

Am embodiment of the invention is illustrated in the drawing and will be described in the following. There are shown:
Figure 1 a cross section through one half of a pneumatic tyre in accordance with the invention;
Figure 2 a schematic illustration of a first variant of a breaker arrangement and cover ply arrangement in accordance with the invention to a reduced scale in comparison to Figure 1; and
Figure 3 a second variant of a breaker arrangement and cover ply arrangement in accordance with the invention in an illustration corresponding to Figure 2.

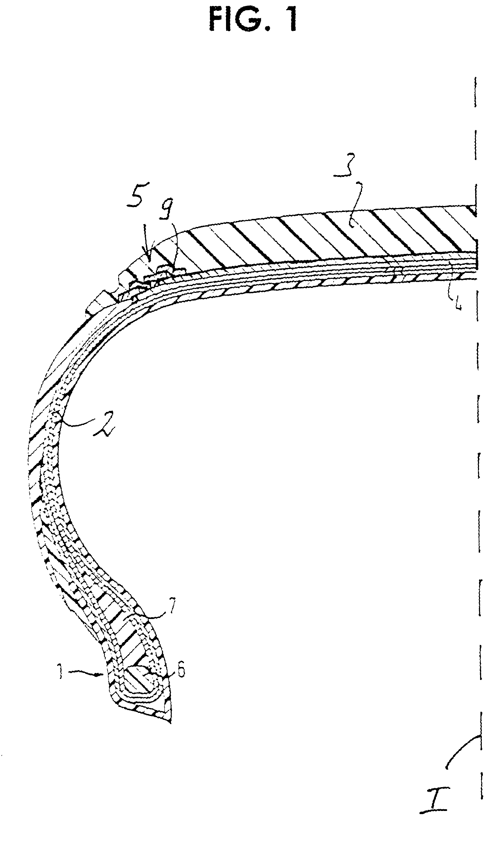

The tyre shown in Figure 1 has a carcass 2 extending between beads 1, anchored to bead rings 6, a tread strip 3 and a breaker assembly 4, provided between the carcass 2 and the tread strip 3 and consisting of two cut breaker plies 13,14 and also a breaker cover 5 surrounding the breaker arrangement. A bead apex 7 is arranged on the bead core 6. The two cut breaker plies 13 and 14 have different widths, as is generally customary in such tyres, with the radially inner cut breaker ply 13 being wider than the radially outer cut breaker ply 14.

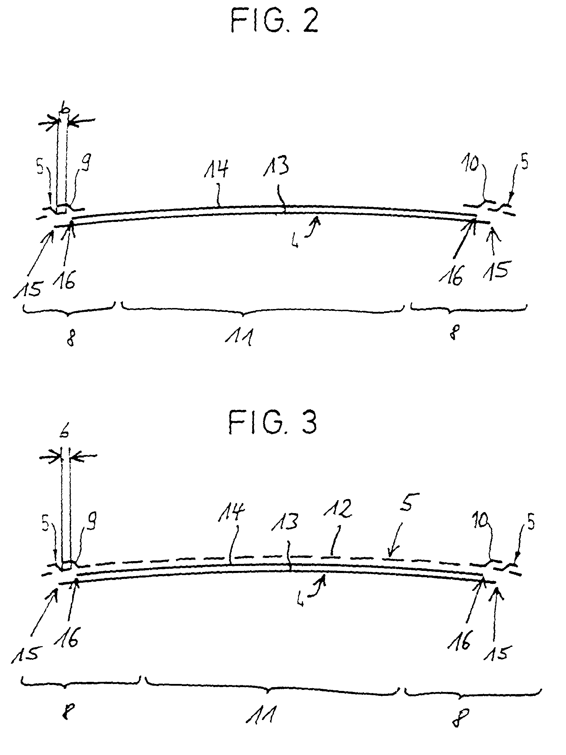

In Figure 2 the breaker cover 5 is formed in two shoulder regions 8 by a strip bandage 9 and 10 respectively, each being formed from a narrow helically wound strip. The central tyre region 11 disposed between them has no breaker cover. The two strip bandages 9 and 10 have threads or cords of heat-shrinking material, particular nylon, and respectively extend over a region which starts axially outwardly of the side edge 15 of the wider breaker ply 13 and terminates axially somewhat further inwardly of the side edge 16 of the narrower breaker ply 14.

In the variant illustrated in Figure 3 a breaker cover 5 is also present in the central tyre region 11 in addition to the two-strip bandages 9 and 10 in the two shoulder regions 8 of the tyre and is likewise formed as a strip bandage 12. In this variant the strip bandages 9 and 10 have threads or cords of heat-shrinking material, whereas the strip bandage 12 has threads or cords of a material which does not shrink when heated or hardly shrinks when heated, for example aramide or rayon.

In both variants the strip bandages 9 and 10 can also be wound, other than as shown, so that they do not overlap or overlap more, or the width of overlap b can be varied in the axial direction of the tyre. Also a broad band assembly can in each case be provided in the two shoulder regions 8 of the tyre instead of the strip bandages 9 and 10, with the ends of the broad band abutting or overlapping one another.

The same also applies to the strip bandage 12, which can likewise be wound abutting or with mutually overlapping turns or can also be replaced by a broad band. The width of overlap b of the turns can also be selected to be different here in the axial direction of the tyre.

In the illustrated embodiments the parts of the breaker cover 5 with threads or cords of heat-shrinking material are thus only used in the region of the side edges 15 and 16 of the breaker arrangement 4. The width of these parts can, however, amount in each case to about 30% of the width of the breaker arrangement 4, other than as illustrated. It is decisive that the shrinkage forces which occur during heating up of the tyre are compensated to the extent that no unacceptable deformations of the tyre are present. In operation of the tyre the centrifugal forces of the breaker arrangement 4 in particular acts as a counterforce. During tyre manufacture the pressure used to mould the tyre tread pattern acts as the counterforce. Only after the still hot tyre has been removed from the heated mould does some limited danger of deformation of the tyre exist. This can, however, be largely avoided by suitable measures, for example by additional reinforcing inserts.

The tyre of the invention is not only favourably priced in manufacture but is also characterised by very favourable tyre characteristics, in particular by fast running characteristics. The movement of the breaker edges 15,16 of the breaker arrangement 4, which occurs during fast running of the tyre, can be controlled via a suitable choice of heat-shrinking materials for the threads or cords of the breaker cover 5 in the two shoulder regions 8 that no breaker separations or other defects of the tyre occur. The centrifugal force acting on the breaker edges 15,16 thereby is counteracted by heat-shrinkage force of the breaker cover 5 in these two regions 8. A compression strength of the breaker arrangement 4 is thus not required so that the breaker arrangement 4 can be formed with threads or cords of non-metallic material and thereby the tyre weight can be significantly reduced when compared with tyres with metal cords.

The region 8 of the breaker cover 5 with threads or cords of heat-shrinking material can be kept very narrow so that a shrinkage force only acts in a narrowly restricted region on the breaker arrangement 4. In particular this region of the breaker cover 5 can be wound by only a few thread or cord turns beyond the respective breaker edges 15,16. For this purpose a winding of individual threads can also be provided instead of a strip bandage 9,10.

On the whole one thus obtains a tyre which can be manufactured at favourable cost and is light and which is characterised by good tyre characteristics, in particular during rapid running.

## Claims

1. A pneumatic vehicle tyre comprising a carcass (7), a tread strip (3), a breaker arrangement (4) provided between the carcass (7) and the tread (3) comprising at least two breaker plies (13,14) reinforced by threads or cords of non-metallic material which extend at a predeterminable angle to the mid-circumferential plane of the tyre, and a breaker cover (5) which surrounds the breaker arrangement and which comprises at least one cover ply having threads or cords which extend at least substantially in the circumferential direction of the tyre, wherein the breaker cover (5) has threads or cords of a heat shrinkable material in the shoulder region (8) of the tyre, and in the central region of the tyre (11) lying therebetween there is provided a breaker cover of threads or cords of no thermal shrinkage and wherein the breaker cover (5) is formed in the two shoulder regions (8) of the tyre in each case as a strip bandage (9,10) helically wound from a narrow strip with neighbouring turns of the strip bandage (9,10) overlapping one another at least in part such that the heat-shrinkable reinforcement in the shoulder regions (8) and the non-heat shrinkable material in the central region of the tyre (11) provides shrinkage forces as a result of tyre heating to counteract centrifugal forces and in manufacture of the tyre no shrinking in the centre region of the tyre.

2. A pneumatic vehicle tyre in accordance with claim 1, characterised in that at least the axial side edges (15,16) of all breaker plies (13,14) are covered with a breaker cover (5) having threads or cords of heat shrinkable material.

3. A pneumatic vehicle tyre in accordance with claim 2, characterised in that the parts (9,10) of the breaker cover (5) which have threads or cords of heat shrinkable material and cover the axial side edges (15,16) of the breaker plies (13,14) each begin fractionally further outwardly, and in particular a few threads or cords axially further outwardly, than the side edge (15) of the widest breaker ply (13) and terminate fractionally axially further inwardly, in particular a few threads or cords axially further inwardly, than the side edge (16) of the narrowest breaker ply (14).

4. A pneumatic vehicle tyre in accordance with one of the preceding claims, characterised in that a polyamide (nylon) serves as the heat shrinkable material for the threads or cords of the breaker cover (5) in the shoulder regions (8) of the tyre.

5. A pneumatic vehicle tyre in accordance with one of the claims 1 to 5, characterised in that a polyester serves as the heat shrinkable material for the threads or cords of the breaker cover (5) in the shoulder regions (8) of the tyre.

6. A pneumatic vehicle tyre in accordance with one of the preceding claims, characterised in that the width of the overlap (b) of neighbouring turns of the strip bandage (9,10) varies in the axial direction of the tyre.

7. A pneumatic vehicle tyre in accordance with one of the preceding claims, characterised in that a breaker cover (5) in the form of a broad band is provided in the central region of the tyre (11), with the ends of the band abutting or overlapping one another.

8. A pneumatic vehicle tyre in accordance with one of the claims 1 to 9, characterised in that a breaker cover (5) in the form of a strip bandage (12) wound helically from a narrow strip is provided in the central region of the tyre (11).

9. A pneumatic vehicle tyre in accordance with one of the preceding claims, characterised in that an aramide is used as the material not heat shrinkable for the threads or cords of the breaker cover (5) in the central region of the tyre (11).

10. A pneumatic vehicle tyre in accordance with one of the preceding claims, characterised in that glass fibre is used as the non-heat shrinkable for the threads or cords of the breaker cover (5) in the central region (11) of the tyre.

11. A pneumatic vehicle tyre in accordance with one of the preceding claims, characterised in that carbon fibre is used as the non-heat shrinkable for the threads or cords of the breaker cover (5) in the central region (11) of the tyre.

12. A pneumatic vehicle tyre in accordance with one of the preceding claims, characterised in that the breaker arrangement (4) is formed as a cut breaker with at least two cut breaker plies (13,14).

13. A pneumatic vehicle tyre in accordance with one of the preceding claims, characterised in that the breaker arrangement (4) has threads or cords of textile material, in particular of aramide, as the reinforcing elements.

14. A pneumatic vehicle tyre in accordance with one of the preceding claims, characterised in that the breaker arrangement (4) has threads or cords of carbon fibre as reinforcing elements.

15. A pneumatic vehicle tyre in accordance with one of the preceding claims, characterised in that the breaker arrangement (4) has threads or cords of glass fibre as reinforcing elements.

## Patentansprüche

1. Fahrzeugluftreifen mit einer Karkasse (7), einem Laufflächenstreifen (3), einer Breakeranordnung (4), die zwischen der Karkasse (7) und der Lauffläche (3) vorgesehen ist und mindestens zwei Breakerlagen (13, 14) umfaßt, die durch Fäden oder Korde aus nicht metallischem Material verstärkt sind, die sich unter einem vorbestimmbaren Winkel zur Mittelumfangsebene des Reifens erstrecken, und einer Breakerdecke (5), die die Breakeranordnung umgibt und die mindestens eine Decklage umfaßt, die Fäden oder Korde aufweist, die sich mindestens im wesentlichen in der Umfangsrichtung des Reifens erstrecken, wobei die Breakerdecke (5) Fäden oder Korde aus einem bei Wärme schrumpfenden Material im Schulterbereich (8) des Reifens aufweist, und im zentralen Bereich des Reifens (11), der dazwischen liegt, eine Breakerdecke aus Fäden oder Korden ohne Wärmeschrumpfung vorgesehen ist, und wobei die Breakerdecke (5) in den beiden Schulterbereichen (8) des Reifens in jedem Fall als eine Streifenbandage (9, 10) gebildet ist, die wendelförmig aus einem schmalen Streifen gewickelt ist, wobei sich benachbarte Windungen der Streifenbandage (9, 10) mindestens teilweise gegenseitig überlappen, so daß die bei Wärme schrumpfende Verstärkung in den Schulterbereichen (8) und das nicht bei Wärme schrumpfende Material im zentralen Bereich des Reifens (11) infolge von Reifenerwärmung Schrumpfungskräfte ergibt, um Fliehkräften entgegenzuwirken, und bei der Herstellung des Reifens keine Schrumpfung im mittleren Bereich des Reifens ergibt.

2. Fahrzeugluftreifen nach Anspruch 1, dadurch gekennzeichnet, daß mindestens die axialen Seitenränder (15, 16) aller Breakerlagen (13, 14) mit einer Breakerdecke (5) bedeckt sind, die Fäden oder Korde aus bei Wärme schrumpfendem Material aufweist.

3. Fahrzeugluftreifen nach Anspruch 2, dadurch gekennzeichnet, daß die Teile (9, 10) der Breakerdecke (5), die Fäden oder Korde aus bei Wärme schrumpfendem Material aufweisen und die axialen Seitenränder (15, 16) der Breakerlagen (13, 14) bedecken, jeweils ein bißchen weiter außen, und insbesondere einige Fäden oder Korde axial weiter außen als die Seitenränder (15) der breitesten Breakerlage (13) beginnen und ein bißchen axial weiter innen, insbesondere einige Fäden oder Korde axial weiter innen als der Seitenrand (16) der schmalsten Breakerlage (14) enden.

4. Fahrzeugluftreifen nach einem der vorhergehenden Ansprüche, dadurch gekennzeichnet, daß ein Polyamid (Nylon) als das bei Wärme schrumpfende Material für die Fäden oder Korde der Breakerdecke (5) in den Schulterbereichen (8) des Reifens dient.

5. Fahrzeugluftreifen nach einem der Ansprüche 1 bis 5, dadurch gekennzeichnet, daß ein Polyester als das bei Wärme schrumpfende Material für die Fäden oder Korde der Breakerdecke (5) in den Schulterbereichen (8) des Reifens dient.

6. Fahrzeugluftreifen nach einem der vorhergehenden Ansprüche, dadurch gekennzeichnet, daß die Breite der Überlappung (b) von benachbarten Windungen der Streifenbandage (9, 10) in der axialen Richtung des Reifens variiert.

7. Fahrzeugluftreifen nach einem der vorhergehenden Ansprüche, dadurch gekennzeichnet, daß eine Breakerdecke (5) in der Form eines breiten Bandes im zentralen Bereich des Reifens (11) vorgesehen ist, wobei die Enden des Bandes aneinander anschlagen oder sich überlappen.

8. Fahrzeugluftreifen nach einem der Ansprüche 1 bis 9, dadurch gekennzeichnet, daß eine Breakerdecke (5) in der Form einer aus einem schmalen Streifen wendelförmig gewickelten Streifenbandage (12) im zentralen Bereich des Reifens (11) vorgesehen ist.

9. Fahrzeugluftreifen nach einem der vorhergehenden Ansprüche, dadurch gekennzeichnet, daß ein Aramid als das nicht bei Wärme schrumpfende Material für die Fäden oder Korde der Breakerdecke (5) im zentralen Bereich des Reifens (11) verwendet wird.

10. Fahrzeugluftreifen nach einem der vorhergehenden Ansprüche, dadurch gekennzeichnet, daß Glasfaser als das nicht bei Wärme schrumpfende für die Fäden oder Korde der Breakerdecke (5) im zentralen Bereich (11) des Reifens verwendet wird.

11. Fahrzeugluftreifen nach einem der vorhergehenden Ansprüche, dadurch gekennzeichnet, daß Kohlefaser als das nicht bei Wärme schrumpfende für die Fäden oder Korde der Breakerdecke (5) im zentralen Bereich (11) des Reifens verwendet wird.

12. Fahrzeugluftreifen nach einem der vorhergehenden Ansprüche, dadurch gekennzeichnet, daß die Breakeranordnung (4) als ein geschnittener Breaker mit mindestens zwei geschnittenen Breakerlagen (13, 14) gebildet ist.

13. Fahrzeugluftreifen nach einem der vorhergehenden Ansprüche, dadurch gekennzeichnet, daß die Breakeranordnung (4) Fäden oder Korde aus Textilmaterial, insbesondere aus Aramid, als die Verstärkungselemente aufweist.

14. Fahrzeugluftreifen nach einem der vorhergehenden Ansprüche, dadurch gekennzeichnet, daß die Breakeranordnung (4) Fäden oder Korde aus Kohlefaser als Verstärkungselemente aufweist.

15. Fahrzeugluftreifen nach einem der vorhergehenden Ansprüche, dadurch gekennzeichnet, daß die Breakeranordnung (4) Fäden oder Korde aus Glasfaser als Verstärkungselemente aufweist.

## Revendications

1. Pneumatique de véhicule, comprenant une carcasse (7), un ruban (3) de bande de roulement, un arrangement (4) de nappe sommet placé entre la carcasse (7) et la bande de roulement (3) et comprenant au moins deux nappes (13, 14) de nappe sommet renforcées par des fils ou câbles d'un matériau non métallique s'étendant avec un angle qui peut être prédéterminé par rapport au plan circonférentiel médian du pneumatique, et un organe de recouvrement (5) de nappe sommet qui entoure l'arrangement de nappe sommet et qui comporte au moins une nappe d'organe de recouvrement ayant des fils ou câbles qui s'étendent au moins pratiquement dans la direction circonférentielle du pneumatique, dans lequel l'organe (5) de recouvrement de nappe sommet a des fils ou câbles d'un matériau thermorétractable dans la région (8) d'épaulement du pneumatique, et, dans la région centrale du pneumatique (11) placée entre les régions d'épaulement, est disposé un organe de recouvrement de nappe sommet formé de fils ou câbles sans retrait thermique, et l'organe de recouvrement (5) de nappe sommet est formé dans les deux régions d'épaulement (8) du pneumatique, dans chaque cas sous forme d'un bandage (9, 10) d'un ruban enroulé en hélice à partir d'un ruban étroit avec des spires voisines du bandage (9, 10) d'un ruban qui se recouvrent au moins dans une partie telle que l'armature thermorétractable placée dans les régions d'épaulement (8) et le matériau non thermorétractable de la région centrale du pneumatique (11) créent des forces de retrait lors du chauffage du pneumatique, avec compensation des forces centrifuges, et, lors de la confection du pneumatique, aucun retrait n'existe dans la région centrale du pneumatique.

2. Pneumatique de véhicule selon la revendication 1, caractérisé en ce que les bords latéraux en direction axiale au moins (15, 16) de toutes les nappes (13, 14) de nappe sommet sont couverts d'un organe (5) de recouvrement de nappe sommet ayant des fils ou câbles d'un matériau thermorétractable.

3. Pneumatique de véhicule selon la revendication 2, caractérisé en ce que les parties (9, 10) de l'organe (5) de recouvrement de nappe sommet qui ont des fils ou câbles d'un matériau thermorétractable et recouvrent les bords latéraux axiaux (15, 16) des nappes (13, 14) de nappe sommet commencent chacune un peu plus loin vers l'extérieur, et en particulier à quelques fils ou câbles axialement plus à l'extérieur que le bord latéral (15) de la nappe la plus large (13) de nappe sommet et se terminent axialement un peu plus à l'intérieur, en particulier à quelques fils ou câbles plus à l'intérieur en direction axiale que le bord latéral (16) de la nappe la plus étroite (14) de nappe sommet.

4. Pneumatique de véhicule selon l'une quelconque des revendications précédentes, caractérisé en ce qu'un polyamide ("Nylon") est utilisé comme matériau thermorétractable des fils ou câbles de l'organe (5) de recouvrement de nappe sommet dans des régions d'épaulement (8) du pneumatique.

5. Pneumatique de véhicule selon les revendications 1 à 4, caractérisé en ce qu'un polyester est utilisé comme matériau thermorétractable pour les fils ou câbles de l'organe (5) de recouvrement de nappe sommet dans les régions d'épaulement (8) du pneumatique.

6. Pneumatique de véhicule selon l'une quelconque des revendications précédentes, caractérisé en ce que la largeur de recouvrement (b) des spires voisines du bandage (9, 10) de ruban varie dans la direction axiale du pneumatique.

7. Pneumatique de véhicule selon l'une des revendications précédentes, caractérisé en ce qu'un organe (5) de recouvrement de nappe sommet sous forme d'une bande large est disposé dans la région centrale du pneumatique (11), les extrémités de la bande étant en butée ou se recouvrant mutuellement.

8. Pneumatique de véhicule selon l'une des revendications 1 à 9, caractérisé en ce qu'un organe (5) de recouvrement de nappe sommet sous forme d'un bandage (12) de ruban enroulé en hélice à partir d'un ruban étroit est disposé dans la région centrale du pneumatique (11).

9. Pneumatique de véhicule selon l'une des revendications précédentes, caractérisé en ce qu'un aramide est utilisé comme matériau non thermorétractable pour les fils ou câbles de l'organe (5) de recouvrement de nappe sommet dans la région centrale du pneumatique (11).

10. Pneumatique de véhicule selon l'une des revendications précédentes, caractérisé en ce que des fibres de verre sont utilisées comme matériau non thermorétractable des fils ou câbles de l'organe (5) de recouvrement de nappe sommet dans la région centrale (11) du pneumatique.

11. Pneumatique de véhicule selon l'une des revendications précédentes, caractérisé en ce que des fibres de carbone sont utilisées comme matériau non thermorétractable pour les fils ou câbles de l'organe (5) de recouvrement de nappe sommet dans la région centrale (11) du pneumatique.

12. Pneumatique de véhicule selon l'une des revendications précédentes, caractérisé en ce que l'arrangement (4) de nappe sommet est formé d'une nappe sommet coupée ayant au moins deux nappes coupées (13, 14) de nappe sommet.

13. Pneumatique de véhicule selon l'une des revendications précédentes, caractérisé en ce que l'arrangement (4) de nappe sommet a des fils ou câbles d'un matériau textile, en particulier d'aramide, comme éléments d'armature.

14. Pneumatique de véhicule selon l'une des revendications précédentes, caractérisé en ce que l'arrangement (4) de nappe sommet a des fils ou câbles de fibres de carbone, comme éléments d'armature.

15. Pneumatique de véhicule selon l'une des revendications précédentes, caractérisé en ce que l'arrangement (4) de nappe sommet a des fils ou câbles de fibres de verre, comme éléments d'armature.
